# EUROPEAN PATENT APPLICATION

(11) **EP 4 424 924 A1**
(43) Date of publication of application: **04.09.2024**
(21) Application number: 22887114.1
(22) Date of filing: 27.10.2022
(51) Int. Cl.: E02F 9/16, E02F 9/26

(54) **CAB FOR CONSTRUCTION MACHINE**

(30) Priority: 28.10.2021 JP 2021176834
(71) Applicant: Hitachi Construction Machinery Tierra Co., Ltd., Shiga 528-0061, (JP)
(72) Inventor: KIHARA, Seiichi, Koka-shi, Shiga 528-0061 (JP); KUWAHARA, Takuma, Koka-shi, Shiga 528-0061 (JP); KIMURA, Shogo, Koka-shi, Shiga 528-0061 (JP)
(74) Representative: MERH-IP Matias Erny Reichl Hoffmann Patentanwälte PartG mbB
(86) International application number: PCT/JP2022/040126
(87) International publication number: WO 2023/074789

(57) **Abstract**

A monitor device (21) provided in a cab box (15) and displaying various types of information is mounted on a front window (18) . As a result, the monitor device (21) is configured to move between a window-closing position where the front window (18) is accommodated within a window frame (16) of the cab box (15) to close an opening (16A) and a window-opening position where the front window (18) is accommodated below a top surface portion (15E) of the cab box (15) as the front window (18) is moved.

## Description

### TECHNICAL FIELD

The present invention relates to a cab for a construction machine provided on a hydraulic excavator, a hydraulic crane and the like and having an opening/closing front window, for example.

### BACKGROUND ART

A hydraulic excavator serving as a construction machine is configured to include a self-propelled lower traveling structure, an upper revolving structure provided rotatably on the lower traveling structure, and a working mechanism provided rotatably on a front side of the upper revolving structure.

A cab for an on-board operator is provided in the upper revolving structure. The cab for a hydraulic excavator includes a cab box having an opening formed on a front side thereof, a front window provided in the cab box and movable between a window-closing position where the opening is closed and a window-opening position where the front window is accommodated below a top surface portion of the cab box, and a monitor device provided in the cab box and displaying various types of information including images of nearby areas taken by a camera. An operator's seat for an on-board operator is provided in the cab box (Patent Document 1).

The monitor device is located so as not to get in the way of an operator seated in the operator's seat viewing forward but to come into sight. The monitor device is also located so as not to compress a space in the cab. Specifically, the monitor device is mounted on a right front pillar of the cab box. Moreover, the monitor device is rotatably mounted on the right front pillar via a support member. As a result, the monitor device of Patent Document 1 has an adjustable mounting angle such that the front window that moves as it is opened or closed does not interfere with the monitor device.

### PRIOR ART DOCUMENT

### PATENT DOCUMENT

Patent Document 1: Japanese Patent Laid-Open No. 2014-136943 A

### SUMMARY OF THE INVENTION

In fact, the monitor device of Patent Document 1 is configured not to allow the front window to interfere with the monitor device by adjusting the mounting angle when the front window is opened or closed. However, it is contemplated that an operator does not realize the need to adjust the mounting angle of the monitor device when the front window is opened or closed. The resulting contact of the front window with the monitor device when it is opened or closed can damage the monitor device.

The monitor device is also located near the right side of the opening of the cab box. Therefore, with the front window open, the monitor device may be exposed to rain water, dust, sand and earth or the like coming from the opening. Unfortunately, in this case, the monitor device can be damaged or fouled.

In view of the above-described conventional technology, it is an object of the present invention to provide a cab for a construction machine capable of preventing contact with a front window that is moved when it is opened or closed and contact of rain water, sand and earth or the like coming into a cab box with a monitor device to improve the durability or visibility of the monitor device.

A cab for a construction machine according to the present invention includes a cab box having an opening formed on a front side thereof, a front window provided in the cab box and movable between a window-closing position where the opening is closed and a window-opening position where the front window is accommodated below a top surface portion of the cab box, and a monitor device provided in the cab box and displaying various types of information, characterized in that the monitor device is mounted on the front window to move between the window-closing position and the window-opening position as the front window is moved.

A cab for a construction machine according to the present invention can prevent contact with a front window that is moved when it is opened or closed and contact of rain water, sand and earth or the like coming into a cab box with a monitor device to improve the durability or visibility of the monitor device.

### BRIEF DESCRIPTION OF THE DRAWINGS

Fig. 1 is a left side view of a hydraulic excavator including a cab according to one embodiment of the present invention.
Fig. 2 is a cross-sectional view showing a cab, with a front window disposed at a window-closing position.
Fig. 3 is a cross-sectional view showing a cab, with the front window disposed at a window-opening position.
Fig. 4 is a perspective view showing the front window, a universal joint and a monitor device viewed from the inside of the cab.
Fig. 5 is a perspective view showing the front window, the universal joint and the monitor device viewed from the outside of the cab.
Fig. 6 is a perspective view showing the front window without the universal joint and the monitor device viewed from the same position as in Fig. 4.

### MODE FOR CARRYING OUT THE INVENTION

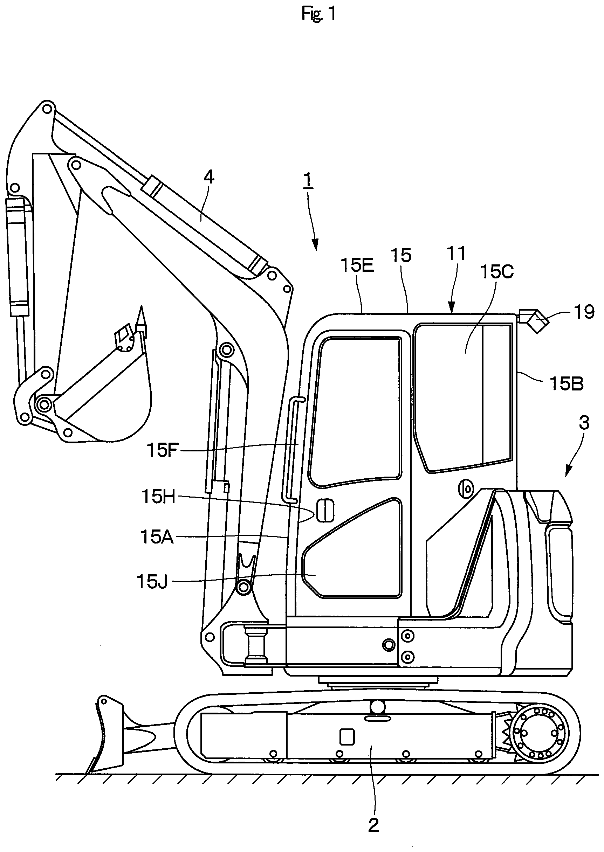

A cab for a construction machine according to an embodiment of the present invention, by taking the case of a cab mounted on a crawler-type hydraulic excavator, will be explained in detail with reference to Figs 1 to 6.

In Fig. 1, a hydraulic excavator 1 serving as a construction machine is configured to include a self-propelled lower traveling structure 2, an upper revolving structure 3 provided rotatably on the lower traveling structure 2, and a swing-type working mechanism 4 provided rotatably on a front side of the upper revolving structure 3. The working mechanism 4 performs excavating work of sand and earth.

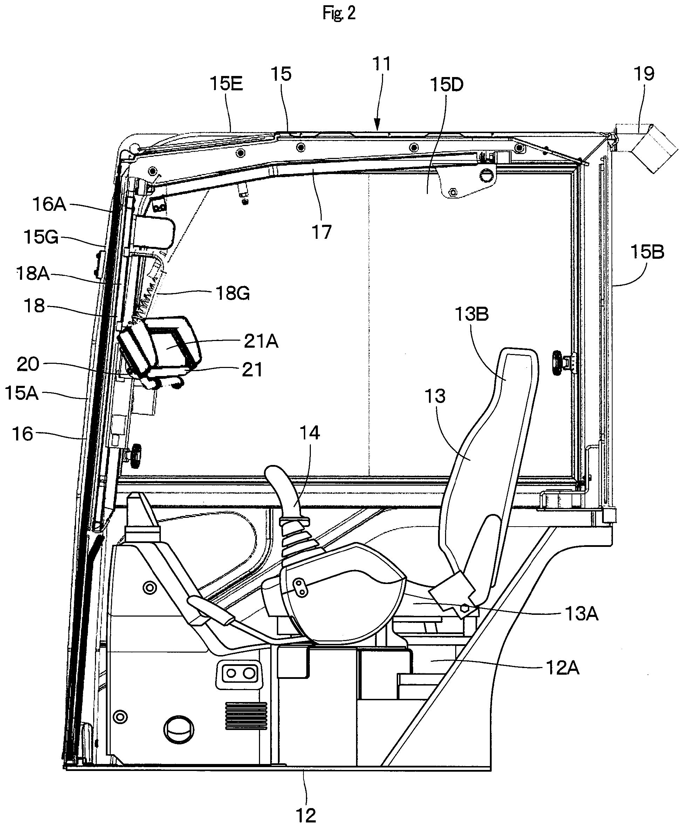

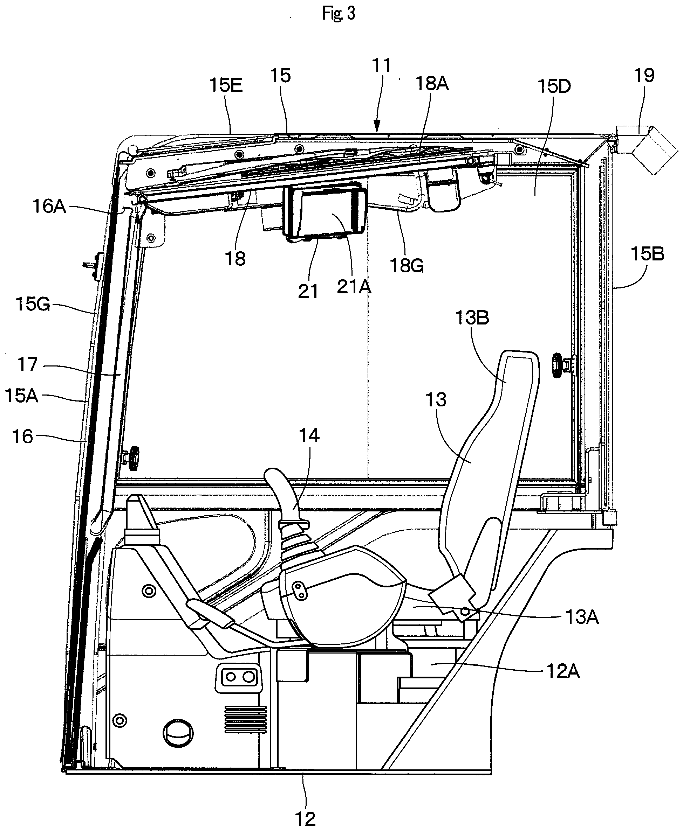

A cab 11 serving as a cab for a construction machine is provided on the front side of the upper revolving structure 3. As shown in Fig. 2 and 3, the cab 11 is configured to include a later-described floor member 12, an operator's seat 13, a working lever device 14, a cab box 15, a front window 18, a universal joint 20, and a monitor device 21.

The floor member 12 constitutes a base of the cab 11. The floor member 12 rises up stepwise on a rear side thereof, and the step portion is an operator's seat stand 12A. The cab box 15 is attached on the periphery of the floor member 12.

The operator's seat 13 is provided on the operator's seat stand 12A of the floor member 12. As a result, the operator's seat 13 is disposed in the cab box 15. The operator's seat 13 includes a seating surface 13A for an on-board operator to sit on and a backrest 13B rising up from a rear side of the seating surface 13A.

The working lever device 14 is provided on both right and left sides of the operator's seat 13 (only the left side working lever device is shown). The working lever device 14 is operated by the operator to operate the working mechanism 4 or the like. A traveling lever/pedal device (not shown) is operated by the operator to allow the lower traveling structure 2 to travel, and is provided on a front side of the floor member 12.

The cab box 15 is provided on an upper side of the floor member 12. The cab box 15 forms an outer shell of the cab 11, and an operator's room therein. As shown in Fig. 1 to 3, the cab box 15 is formed in the form of a box by a front surface portion 15A, a rear surface portion 15B, a left surface portion 15C, a right surface portion 15D and a top surface portion 15E. In addition, the cab box 15 includes a left front pillar 15F provided to extend in the vertical direction at a boundary position between the front surface portion 15A and the left surface portion 15C (left front corner portion) and a right front pillar 15G provided to extend in the vertical direction at a boundary position between the front surface portion 15A and the right surface portion 15D (right front corner portion) . Further, an entrance way 15H is open at a front side portion from an intermediate portion in the front and rear directions of the left surface portion 15C of the cab box 15. The entrance way 15H is opened and closed with a door 15J.

A window frame 16 forms a part of the cab box 15, and is provided at the front surface portion 15A of the cab box 15. The window frame 16 is formed as a rectangular frame body that is slightly smaller than the front surface portion 15A. The window frame 16 is formed over the entire front surface portion 15A of the cab box 15. As a result, a left end edge of the window frame 16 is mounted on the left front pillar 15F. A right end edge of the window frame 16 is mounted on the right front pillar 15G. The window frame 16 includes a rectangular opening 16A over the entire surface. The opening 16A can be closed with a later-described front window 18.

Guide rails 17 are each provided on the left front pillar 15F and the right front pillar 15G of the cab box 15 (only the right side front pillar is shown). The left and right Guide rails 17 are formed as recessed grooves disposed to be opposite each other in the right-and-left direction. The left and right Guide rails 17 are formed to extend in the vertical direction along the window frame 16 (left front pillar 15F, right front pillar 15G), bend rearward at an upper portion of the window frame 16, and then extend in the horizontal direction along a lower surface of the top surface portion 15E. A roller 18E of a front window 18 is moveably fitted to the guide rail 17. As a result, the guide rail 17 can guide the front window 18 to a later-described window-closing position and a window-opening position.

The front window 18 is provided in the cab box 15. The front window 18 can move between a window-closing position where the front window 18 is accommodated within the window frame 16 to close the opening 16A (position shown in Fig. 2) and a window-opening position where the front window 18 is accommodated below the top surface portion 15E (position shown in Fig. 3) . The opening 16A of the window frame 16 is open when the front window 18 is at the window-opening position.

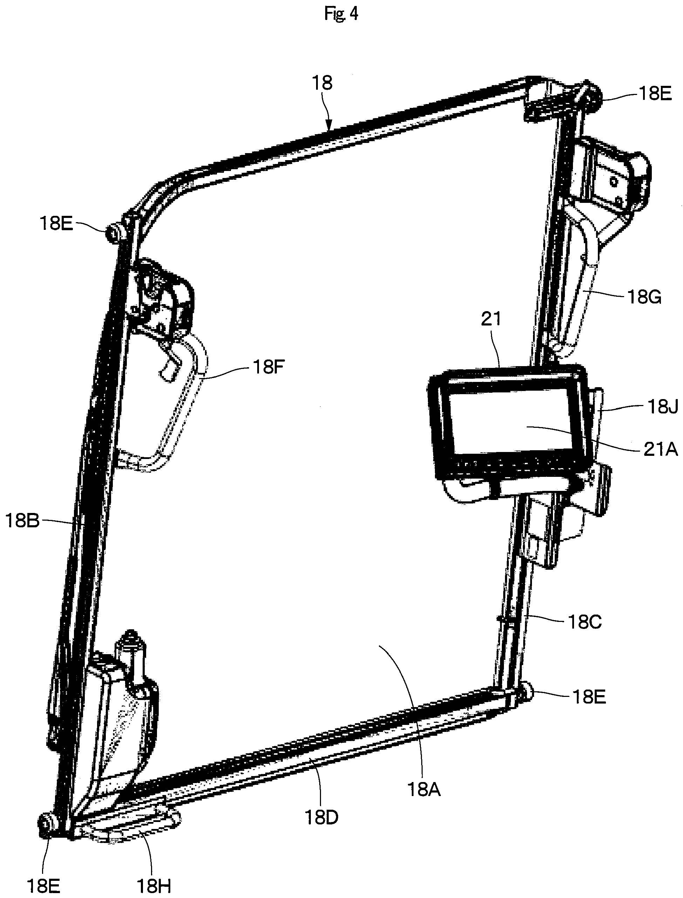

As shown in Figs. 4 to 6, the front window 18 includes a window glass 18A composed of a rectangular glass plate extending in the vertical direction at the window-closing position, a left frame member 18B mounted on the left side of the window glass 18A and extending in the vertical direction along the left side, a right frame member 18C mounted on the right side of the window glass 18A and extending in the vertical direction along the right side, a lower frame portion 18D mounted on a lower side of the window glass 18A and extending in the right-and-left direction along the lower side, and rollers 18E provided at both end portions of the left frame member 18B and both end portions of the right frame member 18C. The rollers 18E are each moveably fitted to the guide rail 17. As a result, the front window 18 can properly move to the window-closing position and the window-opening position by allowing the guide rail 17 to guide the rollers 18E.

Also, the front window 18 has a plurality of, for example, 3 C-shaped grips 18F, 18G, 18H. At the window-closing position of the front window 18, the grip 18F is provided at an upper position of the left frame member 18B (an upper position above an intermediate portion in the length direction) to project toward the inside of the cab 11. The grip 18G is provided at an upper position of the right frame member 18C (the upper position above the intermediate portion in the length direction) to project toward the inside of the cab 11. The grip 18H is provided to project toward the inside of the cab 11 at a left position of the lower frame portion 18D. The grips 18F, 18G, 18H are gripped when the front window 18 is opened or closed. As a result, an operator can readily move the front window 18 with weak force by holding the grips 18F, 18G, 18H when the front window 18 is opened or closed.

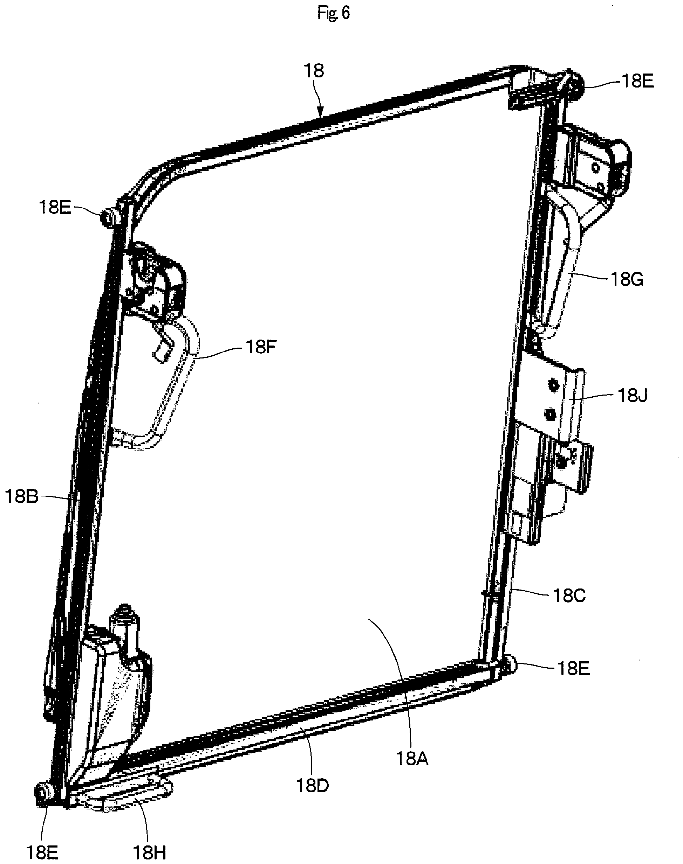

Further, as shown in Fig. 6, a bracket 18J is provided on the right frame member 18C of the front window 18 to project toward the inside of the cab 11. The bracket 18J is composed of a plate member, and integrally mounted near a lower portion of the grip 18G (an intermediate portion in the vertical direction of the right frame member 18C) . The universal joint 20 (monitor device 21) is mounted on the bracket 18J.

As shown in Figs. 1 to 3, a camera device 19 is provided at a rear upper portion of the cab 11. The camera device 19 is configured by a CCD camera or the like, for example. The camera device 19 takes images of a rear side of the hydraulic excavator 1, which is a blind area for an operator in the cab 11. The images taken by the camera device 19 are displayed on the monitor device 21 in the cab 11.

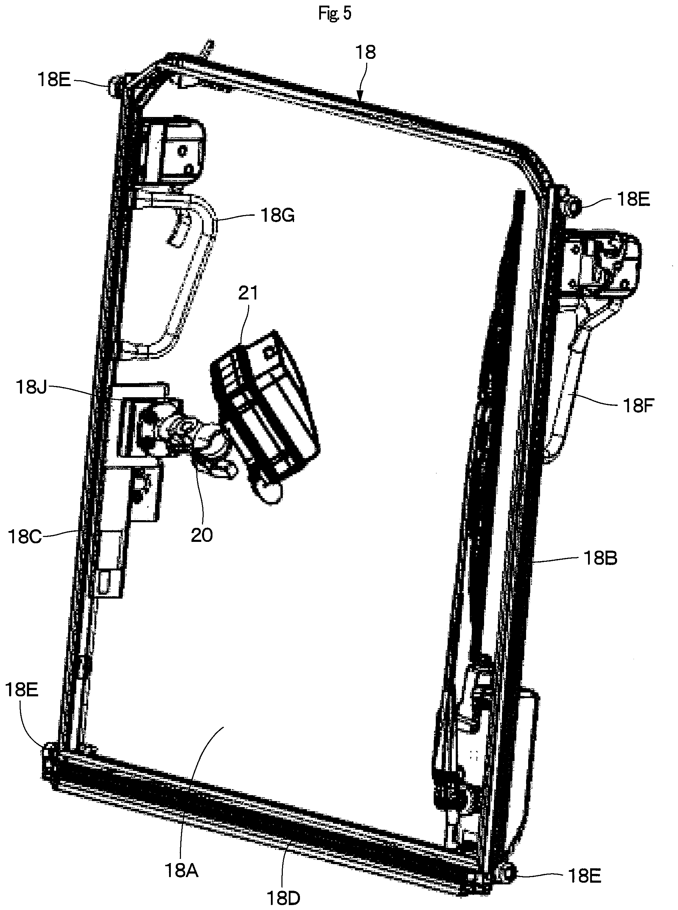

As shown in Figs. 4 and 5, the universal joint 20 is provided at the right frame member 18C of the front window 18. The universal joint 20, which constitutes a connecting member, has an adjustable angle for mounting a later-described monitor device 21 on the front window 18. The universal joint 20 is provided at an intermediate position in the length direction (in the vertical direction) of the right frame member 18C near a lower side of the grip 18G, or on the bracket 18J. The universal joint 20 is configured to interpose a globular body, for example, between two concave spherical surface portions and press the concave spherical surface portions against the globular body, using a screw member. One end of the universal joint 20 is mounted on the bracket 18J of the right frame member 18C of the front window 18. Meanwhile, a later-described monitor device 21 is mounted on the other end of the universal joint 20.

The universal joint 20 can reduce the friction force between the globular body and the concave spherical surface portions by loosening the screw member to change the mounting angle of the monitor device 21. Also, once the mounting angle of the monitor device 21 is determined, the screw member can be tightened to fix the mounting angle of the monitor device 21 by increasing the friction force between the globular body and the concave spherical surface portions. As a result, the universal joint 20 can orient a screen 21A of the monitor device 21 to an operator seated in the operator's seat 13, whether the front window 18 is disposed at the window-closing position or the window-opening position.

The monitor device 21 is provided in the cab box 15. The monitor device 21 displays various types of information such as images of the rear side of the hydraulic excavator 1 taken by the camera device 19. The monitor device 21 is connected to a controller (not shown) by wired connection, using cables or wireless connection.

The monitor device 21 includes a rectangular screen 21A on a front surface side thereof, for example. A rear surface side of the monitor device 21 is mounted on the other end of the universal joint 20. That is, the monitor device 21 is mounted on the front window 18 via the universal joint 20. As a result, the monitor device 21 can move between the window-closing position and the window-opening position as the front window 18 is moved.

The monitor device 21 is mounted on the right frame member 18C of the front window 18 via the universal joint 20. As a result, the monitor device 21 is disposed on the other side in the right-and-left direction opposite the entrance way 15H of the cab box 15, that is, on the right frame member 18C of the front window 18. Therefore, the monitor device 21 is located so as not to get in the way of an operator getting in or out of the cab through the entrance way 15H.

Additionally, the monitor device 21 is provided at the intermediate position in the length direction (in the vertical direction) of the right frame member 18C of the front window 18. The monitor device 21 is located so as not to get in the way of an operator seated in the operator's seat 13 viewing forward at the window-closing position of the front window 18 shown in Fig. 2, but to naturally come into sight and not compress the space in the cab 11.

Meanwhile, the monitor device 21 is located forward from the backrest 13B of the operator's seat 13 at the window-opening position (accommodating position) of the front window 18 shown in Fig. 3. As a result, the operator seated in the operator's seat 13 and facing forward can visually confirm the monitor device 21 at the window-opening position only by looking away slightly rightward.

Moreover, as described above, the monitor device 21 can orient the screen 21A of the monitor device 21 to the operator seated in the operator's seat 13 by manipulating the universal joint 20, whether the front window 18 is disposed at the window-closing position or the window-opening position.

Further, the monitor device 21 is disposed on a lower side of the top surface portion 15E of the cab box 15 together with the front window 18, with the front window 18 and the opening 16A of the window frame 16 open. Therefore, even when rain water, dust, sand and earth and the like come into the cab 11 from the opening 16A of the window frame 16, the monitor device 21 is not readily exposed to rain water, dust, sand and earth, and the like. This configuration can prevent ingress of rain water into the monitor device 21 leading to failure and fouling of the screen 21A by rain water, dust, sand and earth and the like.

The hydraulic excavator 1 applied to this embodiment is configured as described above, and subsequently, the operation of the hydraulic excavator 1 will be explained.

First, an operator rides on the cab 11, gets seated on the operator's seat 13 and manipulates a traveling lever/pedal device to allow the lower traveling structure 2 to travel. The operator can perform excavating work of earth and sand by manipulating a working lever device 14 to rotate the working mechanism 4. Further, the operator can perform work while viewing the range that is hard to check from the cab 11, by visually confirming images shown on the screen 21A of the monitor device 21 provided in the cab 11 such as rear view to retreat the hydraulic excavator 1 or rotate the upper revolving structure 3.

Next, for example, the operator seated in the operator's seat 13 fails to view a distal end side of the working mechanism 4 while the working mechanism 4 digs a deep hole. Thus, the operator manipulates the working mechanism 4 by opening the front window 18, getting up from the operator's seat 13 and leaning the upper body on the front side while peering down. The operator also manipulates the working mechanism 4 by opening the front window 18 even when the operator verbally communicates with other site workers.

One example procedure of moving the front window 18 of the cab 11 to the window-opening position and the window-closing position will be described.

In order to open the front window 18 and accommodate it on the top surface portion 15E side of the cab box 15, the operator unlocks the front window 18 to move the front window 18 upward by holding any of the grips 18F, 18G, 18H. As a result, the front window 18 is located at the window-opening position by allowing each roller 18E to move along the guide rail 17. Meanwhile, to close the front window 18, the operator can dispose the front window 18 at the window-closing position by the procedure opposite to the above-described window-opening procedure.

In this way, according to this embodiment, the monitor device 21 provided in the cab box 15 and displaying various types of information is mounted on the front window 18. As a result, the monitor device 21 is configured to move between the window-closing position where the front window 18 is accommodated within the window frame 16 of the cab box 15 to close the opening 16A and the window-opening position where the front window 18 is accommodated below the top surface portion 15E of the cab box 15 as the front window 18 is moved.

Therefore, in this embodiment, the monitor device 21 is not in contact with the front window 18 that is being moved between the window-closing position and the window-opening position. As a result, in this embodiment, damage to the monitor device 21 by contact with the front window 18 can be prevented. Also, as disclosed in Patent Document 1, the front window 18 can readily be opened or closed because it is not necessary to adjust the mounting angle of the monitor device 21 in order to open or close the front window 18.

Further, the monitor device 21 can be disposed on the lower side of the top surface portion 15E of the cab box 15 together with the front window 18, with the front window 18 open. This configuration does not allow the monitor device 21 to be readily exposed to rain water, dust, sand and earth and the like coming from the opening 16A of the window frame 16 into the cab 11 to prevent damage and fouling on the monitor device 21. These advantages can improve the durability of the monitor device 21 and the visibility of the screen 21A.

The monitor device 21 is mounted on the front window 18, using the universal joint 20 having an adjustable mounting angle. Therefore, the monitor device 21 can orient the screen 21A to the operator seated in the operator's seat 13 by the universal joint 20, whether the front window 18 is disposed at the window-closing position or the window-opening position. These advantages can improve the visibility of the screen 21A of the monitor device 21. In addition, the operator can be provided with images on the screen 21A of the monitor device 21 (information), even with the front window 18 accommodated below the top surface portion 15E.

The operator's seat 13 for an on-board operator is provided in the cab box 15. In this configuration, the monitor device 21 is mounted on the front window 18 so as to be located forward from the backrest 13B of the operator's seat 13, with the front window 18 disposed at the window-opening position shown in Fig. 3. As a result, the monitor device 21 can be located at a position for the operator seated in the operator's seat 13 to readily view, even with the device disposed at the window-opening position together with the front window 18.

Moreover, the cab box 15 includes the entrance way 15H for allowing access to one side in the right-and-left direction or the left surface portion 15C. The monitor device 21 is disposed on the right side of the front window 18 (the other side in the right-and-left direction) opposite the entrance way 15H. As a result, the monitor device 21 can be located so as not to get in the way of an operator getting in or out of the cab through the entrance way 15H.

Moreover, the embodiments are explained by taking the example where a cab 11 of a crawler-type hydraulic excavator 1 is illustrated as a cab for a construction machine. However, the present invention is not limited to that, and a cab 11 in accordance with this embodiment may be employed in, for example, a hydraulic excavator with a wheel-type lower traveling structure. In addition, such cabs can widely be used for other types of construction machines such as a hydraulic crane.

### DESCRIPTION OF REFERENCE NUMERALS

1: Hydraulic excavator (Construction machine)
11: Cab (Cab for construction machine)
13: Operator's seat
13B: Backrest
15: Cab box
15A: Front surface portion
15C: Left surface portion
15E: Top surface portion
15H: Entrance way
16: Window frame
16A: Opening
18: Front window
20: Universal joint
21: Monitor device

## Claims

1. A cab for a construction machine, comprising:
a cab box having an opening formed on a front side thereof;
a front window provided in the cab box and movable between a window-closing position where the opening is closed and a window-opening position where the front window is accommodated below a top surface portion of the cab box; and
a monitor device provided in the cab box and displaying various types of information, wherein
the monitor device is mounted on the front window to move between the window-closing position and the window-opening position as the front window is moved.

2. The cab for a construction machine according to claim 1, wherein
the monitor device is mounted on the front window, using a universal joint having an adjustable mounting angle.

3. The cab for a construction machine according to claim 1, wherein
an operator's seat for an on-board operator is provided in the cab box, wherein
the monitor device is mounted on the front window so as to be located forward from a backrest of the operator's seat, with the front window disposed at the window-opening position.

4. The cab for a construction machine according to claim 1, wherein
the cab box comprises an entrance way for allowing access to one side in the right-and-left direction, wherein
the monitor device is disposed on the other side in the right-and-left direction of the front window opposite the entrance way.
